# EUROPÄISCHE PATENTSCHRIFT

(11) **EP 1 020 099 B1**
(45) Veröffentlichungstag und Bekanntmachung des Hinweises auf die Patenterteilung: **29.01.2003**
(21) Anmeldenummer: 98951397.3
(22) Anmeldetag: 15.09.1998
(51) Int. Cl.: H05B 6/80

(54) **VORRICHTUNG ZUR ERWÄRMUNG VON SPEISEN MIT HILFE VON MILLIMETERWELLEN**
DEVICE FOR HEATING UP MEALS USING MILLIMETRE WAVES
DISPOSITIF POUR RECHAUFFER DES ALIMENTS A L'AIDE D'ONDES MILLIMETRIQUES

(30) Priorität: 07.10.1997 DE 19744180
(43) Veröffentlichungstag der Anmeldung: 19.07.2000
(73) Patentinhaber: Forschungszentrum Karlsruhe GmbH, 76133 Karlsruhe (DE)
(72) Erfinder: FEHER, Lambert, D-76351 Linkenhein-Hochstetten (DE); SCHNACK, Manfred, D-27721 Ritterhude (DE); SCHNACK, Sven, D-27721 Ritterhude (DE)
(86) Internationale Anmeldenummer: EP9805846
(87) Internationale Veröffentlichungsnummer: WO99018758

(56) Entgegenhaltungen:
- US-A- 5 245 150
- PATENT ABSTRACTS OF JAPAN vol. 097, no. 009, 30. September 1997 & JP 09 112873 A (MITSUBISHI ELECTRIC CORP), 2. Mai 1997

## Beschreibung

Die Erfindung betrifft eine Vorrichtung zur Erwärmung von Speisen vorzugsweise in einem Flugzeug, insbesondere für eine Vielzahl von Passagieren in einem Großraumflugzeug, wobei die Speisen auf als Speiseträger dienenden servierfähigen Tabletts angeordnet sind und zusammen mit den Tabletts zur Erwärmung auf eine vorgegebene Serviertemperatur von vorzugsweise 50 bis 55°C durch eine Vorrichtung geführt werden.

Die Bewirtung der Passagiere eines Flugzeuges mit warmen Mahlzeiten erfolgt heute durch Aufwärmung der Speisen mittels Warmluftöfen, Induktionsöfen oder Mikrowellengeräten. Diese Geräte sind für eine sehr schnelle, eine homogene und eine räumlich selektive Erwärmung der Speisen nicht geeignet. So ist beispielsweise in der DE 195 25 878 C1 ein Vertikalförderer zum Transport von Verpflegungsgütern an Bord eines Flugzeuges mit zwei gegensinnig umlaufenden Riemensystemen beschrieben, die an Menüschachteln über quer zur Laufrichtung der Bänder orientierte leistenförmige Mitnehmer angreifen. Es ist mindestens eine Aufwärmeinrichtung vorgesehen. Diese Einrichtung besteht im wesentlichen aus mindestens einem um eine vertikale Achse schwenkbaren Paket von Wärmeinduktoren, die jeweils eine Induktionsspule enthalten und in die zwischen den Menüschachteln bestehenden Zwischenräume ein- und ausschwenkbar sind.

In der US 5,245,150 wird eine Vorrichtung zur Erwärmung von Speisen vorgestellt. Die selektive Erwärmung erfolgt über einen Auswahlmechanismus mit einem Detektor. Der Auswahlmechanismus selektiert einen vorbestimmten Bereich auf einem Tablett mit den zu erwärmenden Speisen. Dieser selektierte Bereich wird dann erhitzt.

Der Erfindung liegt nun die Aufgabe zugrunde, eine Vorrichtung der eingangs genannten Art zu schaffen, durch die eine mundgerechte Erwärmung einer Vielzahl von Warmspeisen unmittelbar vor Servierung ermöglicht wird, um eine optimale gleichmäßige Versorgung aller Passagiere insbesondere eines Größraumflugzeuges sicherzustellen.

Die Aufgabe wird erfindungsgemäß die Merkmale des Anspruchs 1 gelöst.

Ein Vorteil der Erfindung liegt in einer schnellen, selektiven und gleichmäßigen Erwärmung der Warmspeisen auf Serviertemperatur, wodurch sich nicht nur Prozeßzeiten und damit verbunden der Energieverbrauch wesentlich reduzieren lassen, sondern gleichzeitig auch die Materialeigenschaften der Menüs verbessert werden. Die gemäß einer Ausgestaltung der Erfindung für die Speiseerwärmung verwendeten Millimeterwellen mit einer Frequenz oberhalb von ca. 24 GHz liegen vorteilhafterweise weit oberhalb der üblichen flugzeugbezogenen Avionikfrequenz, so daß Störungen für den Flugbetrieb aufgrund der Gyrotron-Öfen nicht auftreten können. Die verwendeten Millimeterwellen erlauben eine günstige Energieeinkopplung in die Speisen. Die Strahlung dringt direkt, ohne Umwege von außen nach innen in die Speisen ein. Die Bestandteile der Speisen geraten in Schwingungen, wodurch Reibung und Wärme im Speiseinnern entstehen, so daß eine Erwärmung der gesamten Warmspeise erfolgt. Die Erwärmung erfolgt in Sekunden. Somit ist ein kurzfristiger automatischer Durchsatz mit warmen Mahlzeiten in Großraumflugzeugen unproblematisch.

Gemäß einer Weiterbildung der Erfindung ist.vorteilhafterweise ein selektiertes Erwärmen der Warmspeisen durch rechnergesteuerte. Fokussierung der in dem Gyrotron-Ofen abgegebenen strahlgeführten hochfrequenten Millimeterwellen durchführbar, d. h. bei entsprechender Mahlbestückung des Tabletts lassen sich eine oder mehrere Speisen selektiver wärmen, während andere Teilbereiche unbeeinflußt im vorherigen Zustand verharren.

Weitere Ausgestaltungen der Erfindung bestehen darin, daß der Gyrotron-Ofen Bestandteil einer Prozeßstraße ist, die mindestens ein mit dem Gyrotron-Ofen verbundenes Transportmodul zur Homogenisierung der erwärmten Speisen aufweist und die von den auf den Tabletts angeordneten Speisen durchlaufen wird, die Prozeßstraße weitere Gyrotron-Öfen aufweist, die mit Transportmodulen verbunden sind, die von den Gyrotron-Öfen bereitgestellten hochfrequenten Millimeterwellen mittels mindestens eines Hohlleitersystems in das Modul ausgekoppelt, wobei die Wand für die StreuStrahlung absorbierend beschichtet ist, und über ein Spiegelsystem, das aus mindestens einem Spiegel besteht, auf die zu erwärmenden Speisen geleitet werden, unterhalb der die zu erwärmenden Speisen tragenden Tabletts eine Mikrowellen reflektierende Schicht angeordnet ist, Sensoren zur Erfassung der Temperaturen der erwärmten Speisen vorgesehen sind, und daß der Rechner vorzugsweise mittels Bar-Code-Leser die Erwärmung der Speisen in Abhängigkeit von diesen ermittelten Temperaturen automatisch menue-spezifisch regelt, und daß über den Rechner sowohl die optische Achse und Fokaleigenschaften über Verstelleinrichtungen an den Spiegeln, als auch die Fokussierungseigenschaften des eingekoppelten Strahles über Verstelleinrichtungen an der Einkopplung veränderbar sind.

In der Zeichnung ist ein Ausführungsbeispiel nach der Erfindung dargestellt, und zwar zeigt:
Fig 1 eine Prinzipdarstellung der Prozeßstraße zur Speisenerwärmung; und
Fig. 2 ein Anwendungsmodul für eine Vorrichtung zur Erwärmung von Speisen.

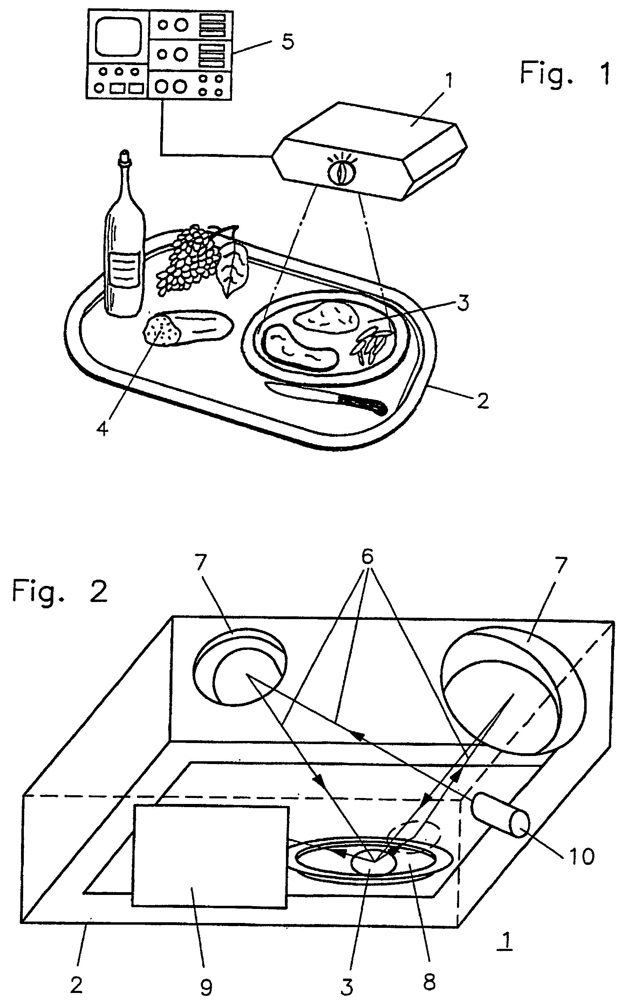

In Fig. 1 sind auf einem Tablett 2 eine Reihe von Speisen 4 angeordnet, von denen lediglich das Fleischgericht 3 mundgerecht auf eine Temperatur von vorzugsweise 50 bis 55°C erwärmt werden soll. Das Gyrotron arbeitet oberhalb von ca. 24 GHz im kontinuierlichen Betrieb. Die Mikrowellenstrahlung ist in ihrer Intensität leicht variierbar und weist eine homogene Leistungsdichte auf. Zur Regelung des Gyrotron-Ofens 1 ist ein Rechner 5 vorgesehen, wobei sich ein manuelles, halbautomatisches und vollautomatisches Catering inkl. Vorwahl erwünschter Strahlintensität und Heizfläche vornehmen läßt. Weitere zeichnerisch nicht dargestellte Bauelemente der Vorrichtung sind eine Stromversorgung, Zuführungs- und Entnahmeeinrichtungen sowie eine Sensorik zur betriebsbedingten Parametererfassung des Anlagenablaufes. So können z.B. Sensoren zur Erfassung der Temperaturen der erwärmten Speisen vorgesehen sein, deren Meßwerte dem Rechner 5 zur automatischen menue-spezifischen Regelung zugeführt werden.

Der Gyrotron-Ofen 1 ist vorzugsweise Bestandteil einer Prozeßstraße, die mindestens ein mit dem Gyrotron-Ofen 1 verbundenes zeichnerisch nicht dargestelltes Transportmodul zur Homogenisierung der erwärmten Speisen 3 aufweist und die von den auf den Tabletts 2 angeordneten Speisen 4 durchlaufen wird. Durch den Einsatz mehrerer mit den Transportmodulen verbundener Gyrotron-Öfen ist eine Massenversorgung in Großraumflugzeugen schnell und störungsfrei möglich.

Das aus Fig. 2 ersichtliche Anwendungsmodul koppelt die von einer Gyrotron-Einkopplung 10 bereitgestellten hochfrequenten Millimeterwellen 6 mittels eines zeichnerisch nicht dargestellten Hohlleitersystems aus. Die ausgekoppelten Millimeterwellen 6 werden über ein Spiegelsystem 7 auf ein Speisen aufweisendes Tablett 2, unter dem vorzugsweise eine Mikrowellen reflektierende Schicht 8 angeordnet ist, gelenkt, wo sich auch ein zu erwärmendes Menü befindet. Das Spiegelsystem 7 der Fig. 2 zeigt zwei Spiegel, womit eine gleichmäßige Erwämung des Menüs von zwe Seiten durchgeführt wird. Es könnte aber auch aus noch mehr Spiegeln bestehen. Abschließend werden die Millimeterwellen 6 in einer Mikrowellen absorbierenden Schicht 9 vollständig dissipiert.

Die Erfindung ist auf eine Verwendung in Flugzeugen nicht beschränkt, vielmehr ist eine vorteilhafte Erwärmung von Speisen mittels der erfindungsgemäßen Vorrichtung auch auf Schiffen, in Bahnen oder Großküchen möglich.

### Bezugszeichenliste

- 1: Gyrotro-Ofen, Vorrichtung,
- 2: Tablett
- 3: zu erwärmende Speisen
- 4: Speisen
- 5: Rechner / Prozeßrechner
- 6: Millimeterwellen
- 7: Spiegelsystem
- 8: Mikrowellen reflektierende Schicht
- 9: Mikrowellen absorbierende Schicht
- 10: Gyrotron-Einkopplung

## Patentansprüche

1. Vorrichtung zur Erwärmung von Speisen, wobei die Speisen auf als Speiseträger dienenden servierfähigen Tabletts angeordnet sind und zusammen mit den Tabletts zur Erwärmung der Warmspeisenanteile auf eine vorgegebene Serviertemperatur von vorzugsweise 50 bis 55°C durch die Vorrichtung geführt werden,
**dadurch gekennzeichnet,**
**daß** die Vorrichtung einen Gyrotron-Ofen (1) mit einem Gyrotron als Mikrowellenquelle aufweist, das Gyrotron mit individuell geführter, von einer Anordnung der Warmspeisen auf einem Tablett (2) abhängiger homogener und gerichteter Flächenbestrahlung für eine hochfrequente Millimeterwellenbestrahlung der Speisen (4) ausgerüstet ist, und daß ein Rechner (5) die Flächenbestrahlung und die Erwärmung der Warmspeisen (3) beim Durchlauf der Speisen (4) auf den Tabletts (2) durch den Gyrotron-Ofen (1) regelt.

2. Vorrichtung nach Anspruch 1, **dadurch gekennzeichnet, daß** Laufzeitröhren des Gyrotrons (1) zur Erzeugung der Millimeterwellen mit einer Frequenz oberhalb von ca. 24 GHz betrieben werden.

3. Vorrichtung nach Anspruch 1 oder 2, **dadurch gekennzeichnet, daß** ein selektiertes Erwärmen der Warmspeisen (3) durch eine rechnergesteuerte Fokussierung der von dem Gyrotron (1) abgegebenen strahlgeführten hochfrequenten Millimeterwellen erfolgt.

4. Vorrichtung nach Anspruch 1, 2 oder 3, **dadurch gekennzeichnet, daß** die Vorrichtung Bestandteil einer Prozeßstraße ist, die mindestens ein damit verbundenes Transportmodul zur Homogenisierung der erwärmten Speisen (3) aufweist,
und die Prozeßstraße von den auf den Tabletts (2) angeordneten Speisen (4) durchlaufen wird.

5. Vorrichtung nach Anspruch 4, **dadurch gekennzeichnet, daß** die Prozeßstraße weitere solche Vorrichtungen (1) aufweist, die mit den Transportmodulen verbunden sind.

6. Vorrichtung nach Anspruch 1, 2, 3, 4 oder 5, **dadurch gekennzeichnet, daß** die vom Gyrotron (1) bereitgestellten hochfrequenten Millimeterwellen mittels mindestens eines Hohlleitersystems in das Modul ausgekoppelt und über ein Spiegelsystem, das aus mindestens einem Spiegel besteht, auf die zu erwärmenden Speisen (3) geleitet werden.

7. Vorrichtung nach Anspruch 6, **dadurch gekennzeichnet, daß** unterhalb der die zu erwärmenden Speisen (3) tragenden Tabletts (2) eine Mikrowellen reflektierende Schicht (8) angeordnet ist.

8. Vorrichtung nach einem der Ansprüche 1 bis 7, **dadurch gekennzeichnet, daß** Sensoren zur Erfassung der Temperaturen der erwärmten Speisen (3) vorgesehen sind, und daß der Rechner (5) die Erwärmung der Speisen in Abhängigkeit von diesen ermittelten Temperaturen automatisch menuespezifisch regelt.

9. Vorrichtung nach Anspruch 1, 3, 6 oder 8, **dadurch gekennzeichnet, daß** über den Rechner (5) sowohl die optische Achse und Fokaleigenschaften über Verstelleinrichtungen an den Spiegeln (7), als auch die Fokussierungseigenschaften des eingekoppelten Strahles über Verstelleinrichtungen an einer Einkopplung (10) veränderbar sind.

## Claims

1. Appliance for heating dishes with these dishes being arranged on carrying trays and passed through the appliance on the trays for heating the warm dishes to a specified serving temperature of preferably 50 to 55°C,
**characterized by** this appliance being equipped with a gyrotron heater (1) having a gyroton microwave source and the gyrotron possessing a separately controlled, homogeneous, and directed surface irradiation unit for high-frequency millimeter-wave irradiation of the dishes (4) depending on their arrangement on the tray (2) as well as with a computer (5) controlling surface irradiation and heating of the warm dishes (3) while they are passed (4) through the gyrotron heater (1) on the tray (2).

2. Appliance according to Claim 1, **characterized by** the runtime tubes of the gyrotron (1) being operated at a frequency in excess of about 24 GHz to generate the millimeter waves.

3. Appliance according to Claim 1 or 2, **characterized by** a specific heating of the warm dishes (3) being achieved by computer-controlled focusing of the high-frequency millimeter waves generated by the gyrotron (1).

4. Appliance according to Claim 1, 2 or 3, **characterized by** this appliance being part of a process chain with at least one transport module for the homogenization of the heated dishes (3) and this process chain being passed by the dishes (4) arranged on the trays (2).

5. Appliance according to Claim 4, **characterized by** the process chain being equipped with further appliances of this type (1) that are connected with the transport modules.

6. Appliance according to Claim 1, 2, 3, 4 or 5, **characterized by** the high-frequency millimeter waves generated by the gyrotron (1) being decoupled into the module by at least one waveguide system and passed to the dishes to be heated (3) by a mirror system consisting of one mirror at least.

7. Appliance according to Claim 6, **characterized by** a microwave-reflecting layer (8) being located below the tray (2) carrying the dishes to be heated (3).

8. Appliance according to one of Claims 1 through 7, **characterized by** sensors being provided for measuring the temperatures of the dishes heated (3) and the computer (5) automatically controlling, in a menu-specific manner, the heating of the dishes as a function of these temperatures determined.

9. Appliance according to Claim 1, 3, 6 or 8, **characterized by** the computer (5) allowing to vary the optical axis and focal properties via adjustment units on the mirrors (7) and the focusing properties of the coupled-in ray via adjustment units on a coupling unit (10).

## Revendications

1. Dispositif de réchauffage d'aliments, les aliments étant disposés sur des plateaux prêts à être servis et utilisés comme porte-aliments, conduits à travers le dispositif avec les plateaux pour chauffer les parts de nourriture chaudes à une température de service donnée, de préférence de 50 à 55 °C,
**caractérisé en ce que**
le dispositif comprend un four à gyrotron (1), le gyrotron constituant la source à microondes, que le gyrotron est équipé d'une irradiation superficielle homogène et orientée, dépendant de la disposition des aliments sur un plateau (2), destinée à l'irradiation par microondes millimétriques extra-haute fréquence des aliments (4), et qu'un ordinateur (5) contrôle l'irradiation superficielle et l'échauffement des aliments chauds (3) au passage de la nourriture sur les plateaux (2) àtravers le four à gyrotron (1).

2. Dispositif selon la revendication 1, **caractérisé en ce que** des tubes à modulation de vitesse du gyrotron (1) fournissant les ondes millimétriques fonctionnent à une fréquence supérieure à 24 GHz environ.

3. Dispositif selon la revendication 1 ou 2, **caractérisé en ce qu'**un réchauffement sélectif des aliments chauds (3) est obtenu par une focalisation commandée par ordinateur des ondes millimétriques à extra-haute fréquence conduites par le faisceau, émises par le gyrotron (1).

4. Dispositif selon la revendication 1, 2 ou 3, **caractérisé en ce que** ce dispositif fait partie d'une chaîne d'opérations qui présente au moins un module de transport associé pour l'homogénéisation des aliments chauffés (3),
et que la chaîne d'opération est traversée par la nourriture (4) disposée sur les plateaux (2).

5. Dispositif selon la revendication 4, **caractérisé en ce que** la chaîne d'opérations présente d'autres dispositifs pareils associés aux modules de transport.

6. Dispositif selon la revencidation 1, 2, 3, 4, ou 5, **caractérisé en ce que** les ondes millimétriques extra-haute fréquence fournies par le gyrotron (1) sont découplées dans le module par au moins un système de guides d'ondes et dirigés vers les aliments à chauffer (3) par un système de miroirs constitués d'un miroir au moins.

7. Dispositif selon la revendication 6, **caractérisé en ce qu'**une couche réfléchissant les microondes (8) est disposée au dessous des plateaux (2) portant les aliments à chauffer (3).

8. Dispositif selon une quelconque des revendications 1 à 7, **caractérisée en ce que** des capteurs sont prévus pour enregistrer la température des aliments à chauffer (3) et que l'ordinateur (5) règle automatiquement, selon un menu spécifique, l'échauffement des aliments en fonction de ces températures enregistrées.

9. Dispositif selon la revendication 1, 3, 6 ou 8, **caractérisé en ce que** l'ordinateur (5) permet de modifier l'axe optique et les caractéristiques focales, par l'intermédiaire de dispositifs de réglage se trouvant sur les miroirs (7), ainsi que les caractéristiques de focalisation du faisceau injecté, par l'intermédiaire de dispositifs de réglage se trouvant sur une injection (10).
